# EUROPÄISCHE PATENTSCHRIFT

(11) **EP 1 062 858 B1**
(45) Veröffentlichungstag und Bekanntmachung des Hinweises auf die Patenterteilung: **28.12.2005**
(21) Anmeldenummer: 00112451.0
(22) Anmeldetag: 10.06.2000
(51) Int. Cl.: A01D 80/02

(54) **Heuwerbungsmaschine**
Haymaking machine
Machine de fenaison

(30) Priorität: 25.06.1999 DE 19929110
(43) Veröffentlichungstag der Anmeldung: 27.12.2000
(73) Patentinhaber: CLAAS Saulgau GmbH, 88340 Bad Saulgau (DE)
(72) Erfinder: Geng, Manfred, 88348 Bad Saulgau (DE)

(56) Entgegenhaltungen:
- DE-B- 1 086 476
- DE-U- 8 902 942
- DE-U- 29 512 347

## Beschreibung

Die Erfindung betrifft eine Heuwerbungsmaschine gemäß dem Oberbegriff des Anspruchs 1. Derartige landwirtschaftliche Arbeitsgeräte verfügen über wenigstes einen, um eine in vertikaler Richtung verlaufende Achse drehbaren Rechkreisel, dessen gutaufnehmenden und transportie renden Arbeitsorgane als Einfach- oder Doppelfederzinken ausgeführt und auf Tragarmen angeordnet sind, die einenends mit dem die Drehachse aufnehmenden Grundkörper des Rechkreisels in lösbarer Wirkverbindung stehen. Während der Arbeit nehmen die umlaufenden Federzinken das auf dem Boden liegende Erntegut an und je nach Ausführung der landwirtschaftlichen Arbeitsmaschine geben die Federzinken das Erntegut so wieder ab, daß es durch die Federzinken gewendet wurde bevor es wieder in Breitablage auf dem Boden verteilt wird oder aber die Federzinken nehmen das auf dem Boden liegende Erntegut an und führen es einseitig zu einem Schwad zusammen.

In Abhängigkeit von der Beschaffenheit und der Menge des von den Federzinken zu bearbeitenden Erntegutes, den im Erntegut befindlichen Hindernissen, wie beispielsweise Steinen, und der Geschwindigkeit mit der die Federzinken umlaufen, unterliegen die in das Erntegut eingreifenden Schenkel der Federzinken zum Teil sehr hohen und mitunter häufig wechselnden Belastungen, die regelmäßig dazu führen, daß einzelne Schenkel der Federzinken deformiert werden oder vollständig abbrechen, wodurch die Wirksamkeit der landwirtschaftlichen Maschine stark beeinträchtigt wird. Außerdem entstehen hierdurch nicht unerhebliche Kosten, da stets der gesamte Doppelfederzinken ausgetauscht werden muß, auch wenn nur ein Schenkel eines Doppelfederzinkens deformiert oder gebrochen ist.

Dem Abhilfe schaffend, schlägt das deutsche Gebrauchsmuster DE-U 89 02 942 vor, die Doppelfederzinken an ihrem bodenseitigen Ende mit zusätzlichen Rechelementen zu versehen, sodaß einerseits das von einem Schenkel aufgenommene Gut an mehreren Stellen eines Schenkels abgestützt wird und die größere Anzahl von über den Boden laufenden Rechorganen zudem eine Verbesserung der Rechqualität und damit verbunden niedrigere Ernteverluste begünstigt. Bei einer derartigen, herstellungstechnisch sehr aufwendigen Zinkenform, besteht aber nach wie vor das Problem, daß beim Bruch einzelner Rechelemente stets der gesamte Doppelfederzinken ausgetauscht werden muß.

Um beim Einsatz von Doppelfederzinken auch hohe Fahrgeschwindigkeiten realisieren zu können, ohne daß die Arbeitsqualität ab- und die Zinkendeformation unverhältnismäßig stark zunimmt, schlägt die europäische Patentanmeldung EP 0 756 815 eine Ausführung von Doppelfederzinken vor, die über wenigstens einen gekröpften Schenkel verfügen, sodaß jeweils zwei Schenkel in Drehrichtung der Rechkreisel nacheinander angeordnet sind. Dabei kann der die größere Erntegutmasse aufnehmende vorauslaufende Schenkel mit größerem Abstand zum Boden angeordnet sein, sodaß dieser Schenkel weniger stark hindernisbedingten Belastungsspitzen ausgesetzt ist. Der nachlaufende, mit geringerem Abstand zum Boden angeordnete Schenkel fördert nur noch das vom vorauslaufenden Schenkel nicht aufgenommene Erntegut, sodaß die hierbei auftretenden Belastungen deutlich geringer sind, während andererseits aufgrund des geringeren Abstandes zum Boden hindernisbedingte Lasteinwirkungen auf den Schenkel zunehmen. Auf diese Weise werden einerseits die an den Schenkeln eines Doppelfederzinkens angreifenden Belastungen gleichmäßiger verteilt, andererseits ermöglichen die annähernd hintereinander angeordneten Schenkel eine gründlichere Beräumung des in ihrer Umlaufbahn liegenden Erntegutes.

Da bei einer derartigen Ausführung die Schenkel eines Federzinkens hintereinander angeordnet sind, muß nun zur Einhaltung des gleichen optimalen Abstandes zwischen den Schenkeln benachbarter Federzinken die doppelte Anzahl von Federzinken vorgesehen werden. Andererseits erfordert bereits der Bruch nur eines Schenkels den Austausch des gesamten Federzinkens, um die Arbeitsqualität der landwirtschaftlichen Arbeitsmaschine zu erhalten.

Der Erfindung liegt deshalb die Aufgabe zugrunde, eine Heuwerbungsmaschine so auszuführen, daß die erntegut- und hindernisabhängige Belastung der Schenkel eines Federzinkens verringert wird, wobei der der höheren Belastung ausgesetzte Schenkel bei dennoch auftretender Deformation oder Bruch ohne den gesamten Federzinken austauschen zu müssen, separat gewechselt werden kann und auf konstruktiv einfache Weise eine gleichmäßig hohe Arbeitsqualität über der gesamten Arbeitsbreite erreicht wird.

Erfindungsgemäß wird die Aufgabe durch eine Heuwerbungsmaschine mit den kennzeichnenden Merkmalen des Anspruchs 1 gelöst.

Indem einem wenigstens einen Schenkel aufweisenden Rechzinken einer Heuwerbungsmaschine ein separates Aufnahmeelement in Umlaufrichtung lösbar vorgeordnet wird, welches den Hauptteil des auf dem Boden liegenden Erntegutes aufnimmt und je nach Ausführung der landwirtschaftlichen Arbeitsmaschine zettet und in Breitablage wieder auf den Boden wirft oder zu einem Schwad zusanunenführt, wird sichergestellt, daß das aufgrund der höheren Belastungen schneller verschleißende Aufnahmeelement unabhängig von dem ihm zugeordneten Rechzinken ausgetauscht werden kann. Andererseits werden die herstellungstechnisch aufwendigeren und damit teureren Rechzinken deutlich entlastet, sodaß deren verschleißbedingter Austausch reduziert wird.

Eine konstruktiv einfache Ausführung ergibt sich dann, wenn das Aufnahmeelement stabförmig ausgebildet ist.

In einer weiteren vorteilhaften Ausführung können der Rechzinken und das ihm vorgeordnete Aufnahmeelement unter dem Gesichtspunkt der Fertigungskostenreduzierung aus ein und demselben, an sich bekannten Federstahl oder Kunststoff gefertigt sein. Aufgrund der unterschiedlichen Beanspruchung des Rechzinkens und des Aufnahmeelementes kann in einer weiteren vorteilhaften Ausführung das Aufnahmeelement aus einem, eine große Steifigkeit aber im Vergleich zu Metall niedrigere Masse aufweisenden Kunststoff und der weniger beanspruchte Rechzinken aus einem kostengünstigeren Federstahl gefertigt sein.

Damit über der gesamten Arbeitsbreite eine gleichmäßige Arbeitsqualität erreicht wird, ist in einer weiteren vorteilhaften Ausführung vorgesehen, den oder die Schenkel des Rechzinkens und das ihnen zugeordnete Aufnahmeelement so zueinander versetzt anzuordnen, daß der oder die Schenkel des Rechzinkens und das Aufnahmeelememt auf verschiedenen Bewegungsbahnen um die vertikale Drehachse der Heuwerbungsmaschine umlaufen.

Andererseits können das Aufnahmeelement und wenigstens ein Schenkel des zugeordneten Rechzinkens auf ein und derselben Bewegungsbahn umlaufen, sodaß in diesem Bereich eine intensivere Mitnahme des auf dem Boden liegenden Erntegutes erreicht wird.

Um in Abhängigkeit von der Erntegutmenge und den Ernteguteigenschaften (Feuchtigkeit etc.) für eine optimale Gutannahme den Abstand des Aufnahmeelementes zu dem ihm zugeordneten Rechzinken in Drehrichtung des Rechkreisels variieren zu können, kann das Aufnahmeelement in vorteilhafter Weise auch um die Achse des Tragarms verdreh- und in verschiedenen Positionen feststellbar am Tragarm angeordnet sein.

Damit das den Hauptteil des Erntegutes fördernde Aufnahmeelement nicht zusätzlich noch erhöhten Belastungen aufgrund von Kollisionen mit auf dem Boden liegenden Hindernissen, wie beispielsweise Steinen, ausgesetzt ist, kann das Aufnahmeelement höhenverstellbar am Tragarm angeordnet sein und mit größerem Abstand zum Boden als der oder die Schenkel des Rechzinkens betrieben werden.

Eine konstruktiv einfache Ausführung ergibt sich dann, wenn das Aufnahmeelement selbst auch Befestigungselement für den mit ihm zusammenarbeitenden Rechzinken ist, sodaß nur eine einzige Befestigungsstelle für das Aufnahmeelement und den Rechzinken vorzusehen ist.

Vorteilhafte Ausgestaltungen sind Gegenstand weiterer Unteransprüchen und werden anhand eines in Zeichnungen dargestellten Ausführungsbeispiels näher erläutert.

Es zeigen
- Figur 1: eine gattungsgemäße Heuwerbungsmaschine in der Draufsicht
- Figur 2: einen gattungsgemäßen Rechzinken in Detailansicht
- Figur 3: einen erfindungsgemäßen Rechzinken in Schnittdarstellung gemäß Schnittlinie III-III in Figur 2
- Figur 4: eine weitere Ausführungsform eines erfindungsgemäßen Rechzinkens in Schnittdarstellung

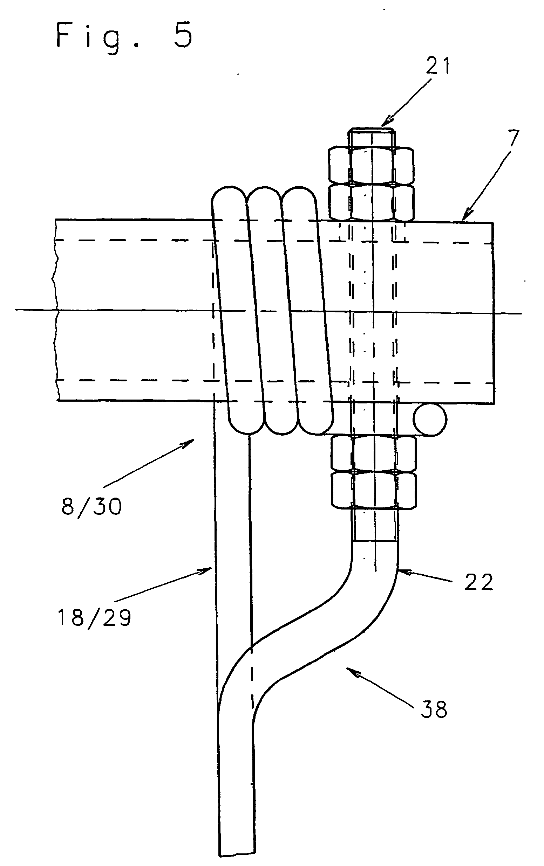

- Figur 5: eine Detailansicht eines erfindungsgemäßen Aufnahmeelementes.

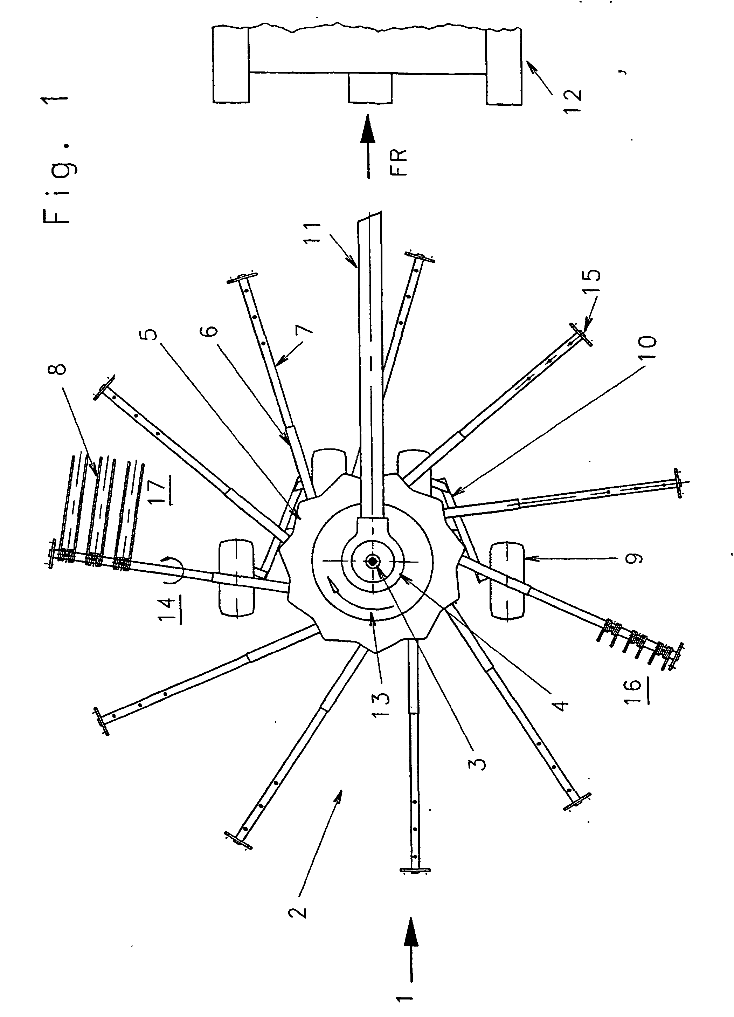

In Figur 1 ist eine als Einkreiselschwader ausgeführte Heuwerbungsmaschine 1 schematisch dargestellt, deren Rechkreisel 2 um eine annähernd vertikale Achse 3 mittels einem an sich bekannten und deshalb nicht näher beschriebenen Getriebe 4 antreibbar ist. Das Getriebe 4 nimmt untenseitig einen ebenfalls bekannten und deshalb nicht näher beschriebenen Kreiselkopf 5 auf, dessen lagerstutzen 6 in radialer Richtung zur Drehachse 3 Tragarme 7 lösbar zugeordnet sind, die an ihren den Lagerungen 6 abgewandten Enden, ebenfalls lösbar, Rechzinken 8 aufnehmen. Zur Abstützung des Einkreiselschwaders 1 auf dem Boden, ist dem Rechkreisel 2 untenseitig ein Laufräder 9 aufweisendes Fahrwerk 10 zugeordnet, wobei die Anzahl der Laufräder und ihre Anordnung zueinander beliebig ausgeführt sein kann. Frontseitig verfügt die Heuwerbungsmaschine 1 über eine als Zugdeichsel 11 ausgeführte Adaptiereinrichtung, die die Heuwerbungsmaschine 1 mit einem Trägerfahrzeug 12, vorzugsweise einem Schlepper, verbindet. Während des Arbeitens auf dem Feld rotiert die durch den Schlepper 12 in Fahrtrichtung FR bewegte Heuwerbungsmaschine 1 gemäß Pfeilrichtung 13 um Achse 3, wobei die mit den Lagerungen 6 lösbar verbundenen Tragarme 7 aufgrund der aus dem Stand der Technik bekannten und deshalb nicht dargestellten Kurvensteuerung der Lagerungen 6 im Inneren des Kreiselkopfes 5 gemäß Pfeilrichtung 14 um ihre Achse 15 in der Weise pendeln, daß die Rechzinken 8 abwechselnd von einer bodennahen Eingriffsstellung 16 in eine bodenferne Nichteingriffsstellung 17 gelangen.

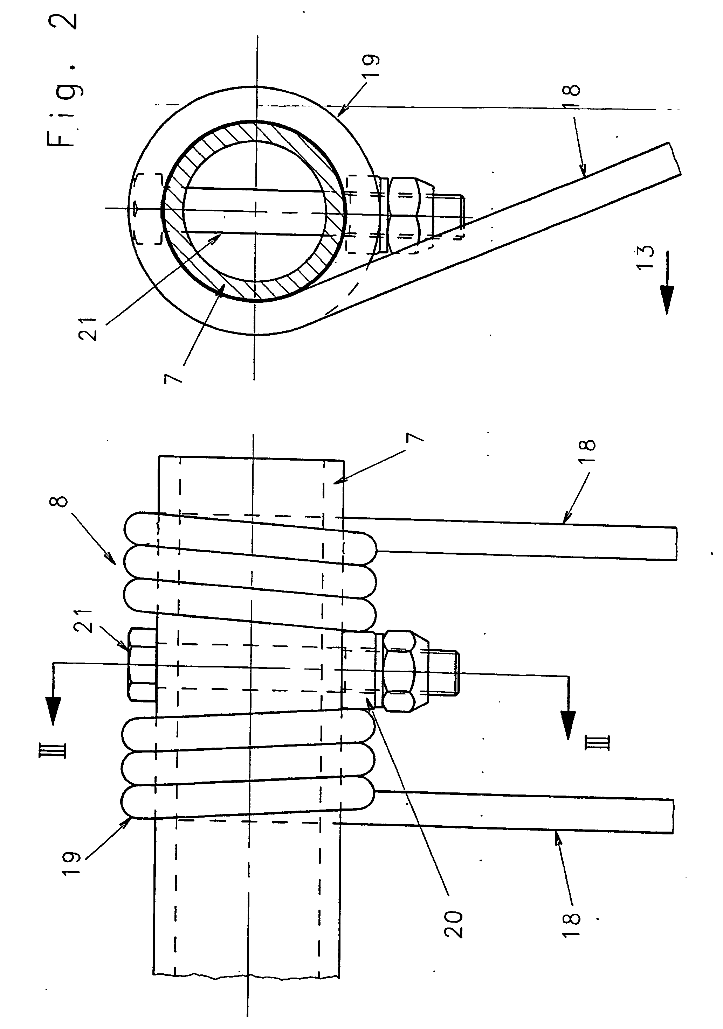

Entsprechend Figur 2 kann der Rechzinken 8 als Doppelfederzinken ausgebildet sein, dessen beide, entgegen der Drehrichtung 13 des Tragarms 7 ausgewölbten Schenkel 18 obenseitig Federwicklungen 19 angeformt haben, die über ein U-förmiges Zwischenstück 20 ineinander übergehen. Die Federwicklungen 19 werden innenseitig von dem Tragarm 7 durchsetzt, auf dem sie im einfachsten Fall mittels einer Schraubverbindung 21 im Bereich des U-förmigen Zwischenstücks 20 lösbar befestigt sind. Aus dem Stand der Technik sind an Stelle der Schraubverbindung 21 auch nicht dargestellte Steck- oder Schnappverbindungen zur Fixierung des Federzinkens 8 auf dem Tragarm 7 bekannt.

Erfindungsgemäß ist den Schenkeln 18 wenigstens eines Rechzinkens 8 ein Aufnahmeelement 22 in Drehrichtung 13 lösbar vorgeordnet, welches im einfachsten Fall als stabförmiges, sich in vertikaler Richtung erstreckendes Aufnahmeelement 22 ausgeführt ist. In vorteilhafter Weise kann das Aufnahmeelement 22 gleichzeitig die Funktion der Schraubverbindung 21 dadurch übernehmen, daß sein oberer Bereich über einen Gewindeabsatz 23 verfügt. Dieser Gewindeabsatz 23 durchsetzt nun die zuvor von der Schraubverbindung 21 durchsetzte Bohrung 24, die vorteilhafter Weise auch als Langloch ausgeführt sein kann, sodaß das Aufnahmeelement 22 gemäß Pfeilrichtung 25 in verschiedenen Schräglagen zu dem oder den Schenkeln 18 des Rechzinkens 8 angeordnet werden kann. Die gemeinsame Fixierung des Rechzinkens 8 und des Aufnahmeelementes 22 am Tragarm 7 wird im einfachsten Fall dadurch erreicht, daß der Gewindeabsatz 23 des Aufnahmeelementes 22 oberhalb und unterhalb des Tragarms 7 als Muttern 26 ausgeführte Verbindungselemente aufnimmt, die auch paarweise angeordnet, als Kontermuttern 27 ausgeführt sein können, wobei die unterhalb des Tragarms 7 angeordneten Muttern 26, 27 das U-förmige Zwischenstück 20 des Rechzinkens 8 gegen den Tragarm 7 pressen, während die oberhalb des Tragarms angeordneten Muttern 26, 27 das Aufnahmeelement 22 und den jeweiligen Rechzinken 8 gemeinsam am Tragarm 7 gegen die unterhalb des Tragarms 7 angeordneten Verbindungselemente 26, 27 fixieren. Aufgrund dessen, daß der Gewindeabsatz 23 über die den Rechzinken 8 und das Auf nahmeelement 22 am Tragarm 7 fixierenden Verbindungselemente 26, 27 hinausragt, kann zudem der Abstand A des Aufnahmeelementes 22 zum Boden 28 verändert werden.
Das Aufnahmeelement 22 ist somit lös- und in vertikaler Richtung höheneinstellbar am Tragarm 7 und in Bewegungsrichtung 13 des Tragarms 7 den Rechzinken 8 vorauslaufend angeordnet. Auf diese Weise wird ermöglicht, daß das Aufnahmeelement 22 im Vergleich zu den Schenkeln 18 der Rechzinken 8 mit größerem Abstand A zum Boden 28 anordenbar ist, sodaß das die größere Erntegutmenge bewegende und damit höheren Belastungen ausgesetzte Aufnahmeelement 22 geringeren Belastungen aufgrund bodenunebenheitsbedingter Kollisionen mit dem Boden 28 oder auf ihm liegenden Hindernissen, wie Steinen oder dergleichen, ausgesetzt ist. Damit das von dem Aufnahmeelement 22 nicht erfaßte Erntegut ebenfalls aufgenommen wird, sind die Schenkel 18 der Rechzinken 8 mit geringerem Abstand B zum Boden 28 angeordnet. Aufgrund der geringeren durch die Rechzinken 8 zu fördernden Erntegutmasse, sind auch die hieraus resultierenden und von den Rechzinken 8 aufzunehmenden Belastungen geringer, sodaß die dichter über dem Boden 28 bewegten Rechzinken 8 höhere durch Kollision mit dem Boden 28 oder auf ihm liegenden Hindernissen verursachte Belastungen aufnehmen können. Ferner kann das vorauslaufende und aufgrund der großen zu bewegenden Erntegutmasse stärker belastete Aufnahmeelement 22 unabhängig von dem ihm zugeordneten Rechzinken 8 ausgetauscht werden, sodaß der verschleißbedingt Bruch des Aufnahmeelementes 22 nicht zwangsläufig auch den Austausch des mit ihm zusammenarbeitenden Rechzinkens 8 erfordert.

Unter dem Gesichtspunkt einer kostengünstigen Herstellung des Aufnahmeelementes 22 und des Rechzinkens 8 können beide Elemente 8, 22 aus dem gleichen Material gefertigt sein, wobei das Material in an sich bekannter Weise Federstahl oder Kunststoff sein kann.

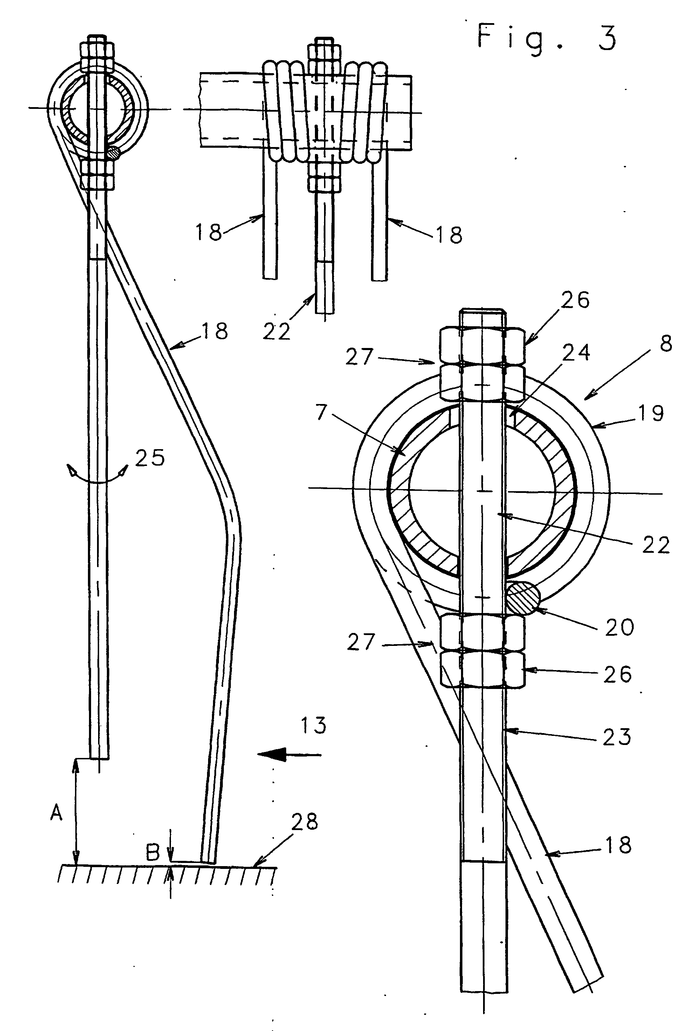

Da jedoch das Aufnahmeelement 22 eine große Steifigkeit aufweisen muß, damit es das angenommene Erntegut sicher transportiert und nicht bei einer entsprechend hohen Belastung ausweicht, wobei die Förderung des aufgenommenen Erntegutes behindert oder vollständig unterbrochen würde, und die Schenkel 18 der Rechzinken 8 demgegenüber eine große Elastizität aufweisen müssen, damit die auftretenden Kollisionen der Schenkel 18 mit dem Boden 28 nicht zu deren Deformation oder Bruch fuhren, können das Aufnahmelement 22 und der mit ihm zusammenarbeitende Rechzinken 8 auch, diesen Bedingungen Rechnung tragend, aus verschiedenen Materialien beschaffen sein. Eine unter diesem Gesichtspunkt besonders vorteilhafte Ausführung wird dann erreicht, wenn die Schenkel 18 der Rechzinken 8 aus kostengünstigem Federstahl gefertigt sind und eine gemäß den Figuren 2 und 3 entgegen der Bewegungsrichtung 13 des Tragarms 7 gewölbte Form aufweisen, während das Aufnahmeelement 22 aus einem eine große Steifigkeit aber im Vergleich zu metallischen Werkstoffen niedrigere Masse aufweisenden Kunststoff besteht.

Damit die jeweils zusammenarbeitenden Rechzinken 8 und das Aufnahmeelement 22 eine gute Beräumung des von ihnen überstrichenen Bereiches auf dem Boden 28 ermöglichen, können das Aufnahmeelement 22 und die Schenkel 18 des mit ihm zusammenarbeitenden Rechzinkens 8 so am Tragarm 7 angeordnet sein, daß sie auf unterschiedlichen Bahnen um Achse 3 der Heuwerbungsmaschine 1 bewegt werden. Verfügt der Rechzinken 8 dabei über zueinander beabstandete Schenkel 18, kann das Aufnehmeelemente 22 vorteilhafter Weise gemäß Figur 3 im Zwischenraum zwischen beiden Schenkeln 18 angeordnet sein.

Ferner liegt es im Rahmen der Erfindung, daß bei einem nur einen Schenkel 18 aufweisenden Rechzinken 8 das Aufnahmeelement 22 in Achsrichtung 15 des Tragarms 7 links- oder rechtsseitig versetzt zu diesem einen Schenkel 18 des Rechzinkens 8 angeordnet sein kann, sodaß Schenkel 18 und Aumahmeelement 22 ebenfalls auf verschiedenen Bahnen um Achse 3 der Heuwerbungsmaschine 1 umlaufen.

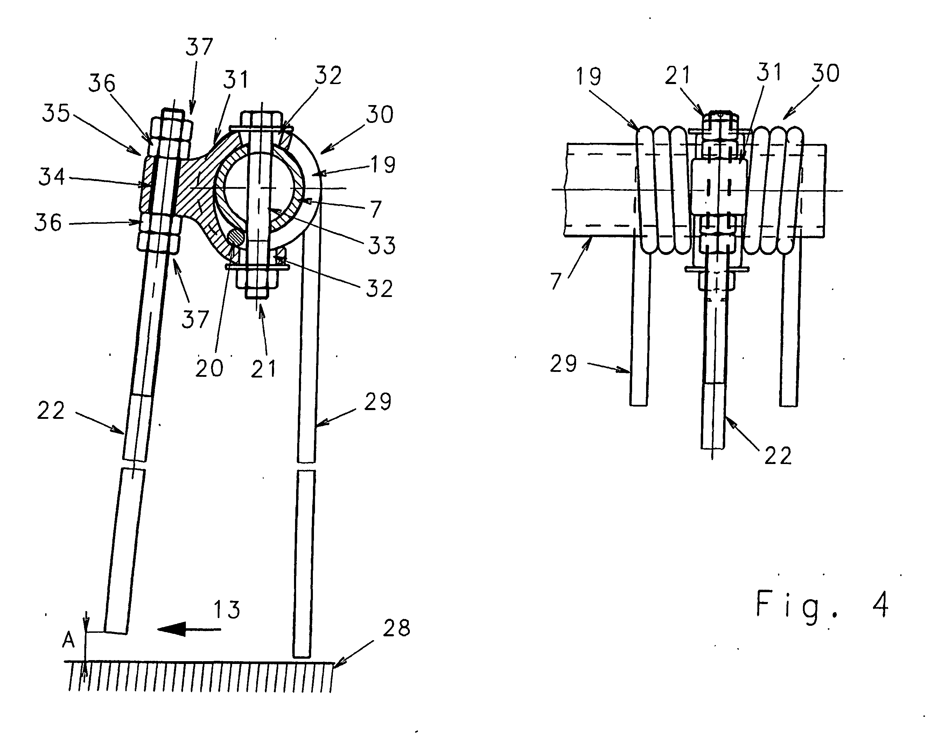

Entsprechend Figur 4 können sich in einer weiteren Ausführungsform die Schenkel 29 des Rechzinkens 30 auch direkt in vertikaler Richtung erstrecken. Damit bei einem derartig ausgeführten Rechzinken 30 das Aufnahmeelement 22 ebenfalls den Schenkeln 29 in Drehrichtung 13 des Tragarms 7 mit genügend großem Abstand vorauslaufend zugeordnet ist, kann das Aufnahmeelement 22 über ein Klemmstück 31 verfügen, welches den Tragarm 7 und das U-förmige Zwischenstück 20 im Bereich zwischen den Federwicklungen 19 wenigstens teilweise umgreift und im Bereich der Schraubverbindung 21 des Rechzinkens 8 über Langlochaussparungen 32 verfügt die von dem Gewindebolzen 33 der Schraubverbindung 21 durchsetzt werden, sodaß das Klemmstück 31 ebenfalls mittels Schraubverbindung 21 am Tragarm 7 befestigt und in seiner Lage am Tragarm 7 veränderbar ist. Frontseitig verfügt das Klemmstück 31 über einen von einer Bohrung 34 durchsetzten Absatz 35, wobei in der Bohrung 34 das an seinem oberen Ende wiederum über den bereits beschriebenen Gewindeabsatz 23 verfügende Aufuabmeelement 22 geführt wird. Zur Einstellung des Abstandes A des Aufnahmeelementes 22 über dem Boden 28 sind wiederum Muttern 36, die auch paarweise als Kontermuttern 37 ausgeführt sein können, vorgesehen, die ober- und unterhalb des Absatzes 35 mit diesem in Wirkverbindung stehend am Aufnahmeelement 22 angeordnet sind. Damit ist einem gemäß Figur 4 ausgeführten Rechzinken 30 ebenfalls ein lösbares Aufnahmeelement 22 vorgeordnet, welches gleichfalls in seinem Abstand A zum Boden einstellbar ist, sodaß hiermit ebenfalls die bereits für das Ausführungsbeispiel gemäß den Figuren 2 und 3 beschriebenen Effekte erzielt werden. Ferner können das Aufnahmeelement 22 und der Zinken 30 in analoger Weise zu dem Ausführungsbeispiel nach Figur 2 und 3 aus ein und demselben oder verschiedenen Materialen, wie beispielsweise Federstahl oder Kunststoff bestehen und auf verschiedenen Bahnen um Achse 3 der Heuwerbungsmaschine 1 umlaufen.

Es liegt im Rahmen der Erfindung, daß das Aufnahmeelement 22 mittels Klemmstück 31 auch außerhalb der Rechzinken 8, 30 am Tragarm 7 der Heuwerbungsmaschine 1 mittels einer Schraubverbindung 21 befestigt sein kann, wobei die Rechzinken 8, 30 auch jeweils nur einen Schenkel 18, 29 aufweisen können.

Vorallem beim Einsatz von Rechzinken 8, 30, die nur über je einen Schenkel 18, 29 verfügen, kann das Aufnahmeelement 22 zudem an seinem dem Tragarm 7 zugewandten Ende über eine Kröpfung 38 verfügen, sodaß der Schenkel 18, 29 des Rechzinkens 8, 30 und das Aufnahmeelement 22 in bauraumsparender Weise auf der gleichen Bewegungsbahn um Achse 3 der Heuwerbungsmaschine 1 umlaufen.

Die am Beispiel eines Einkreiselschwaders 1 beschriebene Erfindung ist nicht auf die dargestellte Heuwerbungsmaschine 1 beschränkt, sondern kann auch an Heuwerbungsmaschinen eingesetzt werden, die über eine beliebige Anzahl Rechzinken 8, 30 -tragender Rechorgane 2 zum Aufnehmen, Bearbeiten sowie zum Breit- oder Schwadablegen bereits geschnittenen Erntegutes verfügen.

### Bezugszeichenliste

- 1: Heuwerbungsmaschine
- 2: Rechkreisel
- 3: Achse
- 4: Getriebe
- 5: Kreiselkopf
- 6: Lagerstutzen
- 7: Tragarm
- 8: Rechzinken
- 9: Laufräder
- 10: Fahrwerk
- 11: Zugdeichsel
- 12: Trägerfahrzeug
- 13: Pfeilrichtung
- 14: Pfeilrichtung
- 15: Achse
- 16: Eingriffsstellung
- 17: Nichteingriffsstellung
- 18: Schenkel
- 19: Federwicklung
- 20: Zwischenstück
- 21: Schraubverbindung
- 22: Aufnahmeelement
- 23: Gewindeabsatz
- 24: Bohrung
- 25: Pfeilrichtung
- 26: Mutter
- 27: Kontermutter
- 28: Boden
- 29: Schenkel
- 30: Rechzinken
- 31: Klemmstück
- 32: Langlochaussparung
- 33: Gewindebolzen
- 34: Bohrung
- 35: Absatz
- 36: Mutter
- 37: Kontermutter
- 38: Kröpfung

- A: Abstand
- B: Abstand
- FR: Fahrtrichtung

## Patentansprüche

1. Heuwerbungsmaschine mit wenigstens einem um eine in vertikaler Richtung verlaufenden Drehachse (3) rotierend angetriebenen, als Rechkreisel (2) ausgeführten Arbeitsorgan, dem radial zur Drehachse (3) ausgerichtete Tragarme (7) zugeordnet sind, die zur Bearbeitung auf dem Boden (28) liegenden Erntegutes in ihrem der Drehachse (3) abgewandten Bereich Rechzinken (8, 30) lösbar aufnehmen, die über wenigstens einen gutbearbeitenden Schenkel (18, 29) verfügen, der im Bereich des Tragarms (7) über eine oder mehrere Federwicklungen (19) verfügt,
**dadurch gekennzeichnet,**
**daß** wenigstens einem Rechzinken (8, 30), ausgebildet als Doppelfeder- oder Einzelfederzinken, ein Aufnahmeelement (22) zur Gutaufnahme und/oder -förderung in der Weise lösbar zugeordnet ist, daß das Aufnahmeelement (22) in Bewegungsrichtung (13) des Rechzinkens (8, 30) vor dem wenigstens einen Schenkel (18, 29) des Rechzinkens (8, 30) läuft, und daß der Abstand (A) des Aufnahmeelementes (22) zum Boden (28) unanbhängig vom Abstand (B) des Schenkels (18) zum Boden (28) einstellbar ist, und daß das ohne Federwicklung stabförmig ausgebildete Aufnahmeelement (22) sich dabei in vertikaler Richtung erstreckt.

2. Heuwerbungsmaschine nach Anspruch 1,
**dadurch gekennzeichnet,**
**daß** der Rechzinken (8, 30) und das Aufnahmeelement (22) aus dem gleichen Material sind und das Material ein an sich bekannter Federstahl oder Kunststoff ist.

3. Heuwerbungsmaschine nach einem oder mehreren der Ansprüche 1 und 2
**dadurch gekennzeichnet,**
**daß** der Rechzinken (8, 30) und das Aufnahmeelement (22) aus unterschiedlichem Material sind und das die Materialien an sich bekannte Federstähle oder Kunststoffe sind.

4. Heuwerbungsmaschine nach einem oder mehreren der vorhergehenden Ansprüche,
**dadurch gekennzeichnet,**
**daß** das Aufnahmeelement (22) in radialer Richtung in der Weise vor dem wenigstens einen Schenkel (18, 29) des Rechzinkens (8, 30) am Tragarm (7) angeordnet ist, daß das Aufnahmeelement (22) und der wenigstens eine Schenkel (18, 29) auf unterschiedlichen Bewegungsbahnen um die Drehachse (3) umlaufen.

5. Heuwerbungsmaschine nach einem oder mehreren der vorhergehenden Ansprüche,
**dadurch gekennzeichnet,**
**daß** das Aufnahmeelement (22) in radialer Richtung in der Weise vor dem wenigstens einen Schenkel (18, 29) des Rechzinkens (8, 30) am Tragarm (7) angeordnet ist, daß das Aufnahmeelement (22) und der wenigstens eine Schenkel (18, 29) auf gleicher Bewegungsbahn um die Drehachse (3) umlaufen.

6. Heuwerbungsmaschine nach einem oder mehreren der vorhergehenden Ansprüche,
**dadurch gekennzeichnet,**
**daß** der Rechzinken (8, 30) wenigstens zwei Schenkel (18, 29) aufweist und das das den Schenkeln (18, 29) vorgeordnete Aufnahmeelement (22) in radialer Richtung am Tragarm (7) zwischen den Schenkeln (18, 29) des Rechzinkens (8, 30) liegt.

7. Heuwerbungsmaschine nach einem oder mehreren der vorhergehenden Ansprüche,
**dadurch gekennzeichnet,**
**daß** das Aufnahmeelement (22) in verschiedene Lagen am Tragarm (7) verdreh- und feststellbar ist.

8. Heuwerbungsmaschine nach einem oder mehreren der vorhergehenden Ansprüche,
**dadurch gekennzeichnet,**
**daß** der Rechzinken (8, 30) zur Adaptierung am Tragarm (7) über einen Befestigungsbereich (20, 21) verfügt, der gleichzeitig auch als Befestigungsbereich (21) für das am Tragarm (7) adaptierte Aufnahmeelement (22) ausgebildet ist.

9. Heuwerbungsmaschine nach einem oder mehreren der vorhergehenden Ansprüche,
**dadurch gekennzeichnet,**
**daß** das Aufnahmeelement (22) und der Rechzinken (8, 30) durch ein und dieselbe Schraubverbindung (21) am Tragarm (7) befestigt sind.

10. Heuwerbungsmaschine nach Anspruch 11,
**dadurch gekennzeichnet,**
**daß** die Schraubverbindung (21) durch das Aufnahmeelement (22) selbst und Befestigungselemente (26, 27) gebildet wird.

11. Heuwerbungsmaschine nach einem oder mehreren der vorhergehenden Ansprüche,
**dadurch gekennzeichnet,**
**daß** das Aufnahmeelement (22) über ein Klemmstück (31) mit dem Tragarm (7) verbunden ist.

12. Heuwerbungsmaschine nach Anspruch 11,
**dadurch gekennzeichnet,**
**daß** das Klemmstück (31) in seiner Lage am Tragarm (7) verdreh und feststellbar ist.

## Claims

1. A hay collecting machine comprising at least one working member which is in the form of a rake rotor (2) and which is driven in rotation about an axis of rotation (3) extending in the vertical direction and with which there are associated carrier arms (7) which are oriented radially with respect to the axis of rotation (3) and which, for processing crop material lying on the ground (28), in their region remote from the axis of rotation (3), releasably carry rake tines (8, 30) which have at least one material-processing limb (18, 29) which has one or more spring windings (19) in the region of the carrier arm (7),
**characterised in that**
releasably associated with at least one rake tine (8, 30) in the form of a double-spring or single-spring tine is a pick-up element (22) for picking up and/or conveying material, in such a way that the pick-up element (22) in the direction of movement (13) of the rake tine (8, 30) extends in front of the at least one limb (8, 29) of the rake tine (8, 30), and that the spacing (A) of the pick-up element (22) relative to the ground (28) is adjustable independently of the spacing (B) of the limb (18) relative to the ground (28), and that **in that** case the pick-up element (22) which is of a bar-shaped configuration without a spring winding extends in a vertical direction.

2. A hay collecting machine according to claim 1 **characterised in that** the rake tine (8, 30) and the pick-up element (22) are of the same material and the material is a per se known spring steel or plastic.

3. A hay collecting machine according to one or more of claims 1 and 2 **characterised in that** the rake tine (8, 30) and the pick-up element (22) are of different materials and the materials are per se known spring steels or plastics.

4. A hay collecting machine according to one or more of the preceding claims **characterised in that** the pick-up element (22) is arranged in the radial direction in front of the at least one limb (18, 29) of the rake tine (8, 30) on the carrier arm (7) in such a way that the pick-up element (22) and the at least one limb (18, 29) rotate about the axis of rotation (3) on different paths of movement.

5. A hay collecting machine according to one or more of the preceding claims **characterised in that** the pick-up element (22) is arranged in the radial direction in front of the at least one limb (18, 29) of the rake tine (8, 30) on the carrier arm (7) in such a way that the pick-up element (22) and the at least one limb (18, 29) rotate about the axis of rotation (3) on the same path of movement.

6. A hay collecting machine according to one or more of the preceding claims **characterised in that** the rake tine (8, 30) has at least two limbs (18, 29) and the pick-up element (22) arranged in front of the limbs (18, 29) is disposed in the radial direction on the carrier arm (7) between the limbs (18, 29) of the rake tine (8, 30).

7. A hay collecting machine according to one or more of the preceding claims **characterised in that** the pick-up element (22) is rotatable into and fixable in various positions on the carrier arm (7).

8. A hay collecting machine according to one or more of the preceding claims **characterised in that** for adaptation to the carrier arm (7) the rake tine (8, 30) has a fixing region (20, 21) which at the same time is also in the form of a fixing region (21) for the pick-up element (22) which is adapted to the carrier arm (7).

9. A hay collecting machine according to one or more of the preceding claims **characterised in that** the pick-up element (22) and the rake tine (8, 30) are fixed to the carrier arm (7) by one and the same screw connection (21).

10. A hay collecting machine according to claim 11 **characterised in that** the screw connection (21) is formed by the pick-up element (22) itself and fixing elements (26, 27).

11. A hay collecting machine according to one or more of the preceding claims **characterised in that** the pick-up element (22) is connected to the carrier arm (7) by way of a clamping portion (31).

12. A hay collecting machine according to claim 11 **characterised in that** the clamping portion (31) is rotatable and fixable in its position on the carrier arm (7).

## Revendications

1. Machine de fenaison comportant au moins un organe de travail conformé en peigne rotatif (2), entraîné en rotation autour d'un axe de rotation (3) vertical, auquel sont associés des bras supports (7) qui sont orientés radialement par rapport à l'axe de rotation (3) et qui, pour le travail du produit de récolte couché sur le sol (28), reçoivent dans leur partie éloignée de l'axe de rotation des peignes de fenaison (8, 30) avec au moins une dent de travail du produit de récolte qui présente une ou plusieurs spires de ressort (19) dans la région du bras support (7), **caractérisée par le fait qu'**à au moins un peigne de fenaison (8, 30), conformé en peigne à ressort simple ou double, est associé un élément de ramassage (22) séparable, pour ramasser et/ou transporter le produit de récolte, d'une manière telle que l'élément de ramassage (22), dans la direction de déplacement (13) du peigne de fenaison (8, 30) soit placé devant la dent (18, 29), au nombre d'au moins une, du peigne de fenaison, **par le fait que** la distance (A) de l'élément de ramassage (22) par rapport au sol (28) peut être réglée indépendamment de la distance (B) de la dent (18) par rapport au sol (28) et **par le fait que** l'élément de ramassage (22), conformé en tige sans spires de ressort, s'étend dans la direction verticale.

2. Machine de fenaison selon la revendication 1, **caractérisée par le fait que** le peigne de fenaison (8, 30) et l'élément de ramassage (22) sont réalisés en le même matériau et que le matériau est un acier à ressort ou une matière plastique connu en soi.

3. Machine de fenaison selon une ou plusieurs des revendications 1 et 2, **caractérisée par le fait que** le peigne de fenaison (8, 30) et l'élément de ramassage (22) sont réalisés en des matériaux différents et que les matériaux sont des aciers à ressort ou des matières plastiques connus en soi.

4. Machine de fenaison selon une ou plusieurs des revendications précédentes, **caractérisée par le fait que** l'élément de ramassage (22), dans la direction radiale, est disposé devant la dent (18, 29), au nombre d'au moins une, du peigne de fenaison (8, 30) sur le bras support (7), de manière telle que l'élément de ramassage (22) et la dent (18, 29), au nombre d'au moins une, tournent autour de l'axe de rotation (3) sur des trajectoires de déplacement différentes.

5. Machine de fenaison selon une ou plusieurs des revendications précédentes, **caractérisée par le fait que** l'élément de ramassage (22), dans la direction radiale, est disposé devant la dent (18, 29), au nombre d'au moins une, du peigne de fenaison (8, 30) sur le bras support (7), de manière telle que l'élément de ramassage (22) et la dent (18, 29), au nombre d'au moins une, tournent autour de l'axe de rotation (3) sur la même trajectoire de déplacement.

6. Machine de fenaison selon une ou plusieurs des revendications précédentes, **caractérisée par le fait que** le peigne de fenaison (8, 30) comporte au moins deux dents (18, 29) et que l'élément de ramassage (22) placé en premier dans la direction radiale, est disposé entre les dent (18, 29) du peigne de fenaison (8, 30)

7. Machine de fenaison selon une ou plusieurs des revendications précédentes, **caractérisée par le fait que** le l'élément de ramassage (22) peut être tourné et immobilisé dans différentes positions sur le bras support (7).

8. Machine de fenaison selon une ou plusieurs des revendications précédentes, **caractérisée par le fait que** le peigne de fenaison (8, 30) pour l'adaptation sur le bras support (7) comporte une partie de fixation (20, 21) qui est conformé simultanément en partie de fixation (21) pour l'élément de ramassage (22) adapté sur le bras support (7).

9. Machine de fenaison selon une ou plusieurs des revendications précédentes, **caractérisée par le fait que** l'élément de ramassage (22) et le peigne de fenaison (8, 30) sont fixés au bras support (7) par la même liaison vissée (21).

10. Machine de fenaison selon la revendication 9, **caractérisée par le fait que** la liaison vissée (21) est formée de l'élément de ramassage (22) lui-même et d'éléments de fixation (26, 27).

11. Machine de fenaison selon une ou plusieurs des revendications précédentes, **caractérisée par le fait que** l'élément de ramassage (22) est fixé au bras support (7) par une pièce de serrage (31).

12. Machine de fenaison selon la revendication 11, **caractérisée par le fait que** la pièce de serrage (31) peut être tournée et bloquée en position sur le bras support (7).
